# EUROPEAN PATENT SPECIFICATION

(11) **EP 3 614 500 B1**
(45) Date of publication and mention of the grant of the patent: **03.08.2022**
(21) Application number: 18189950.1
(22) Date of filing: 21.08.2018
(51) Int. Cl.: H01R 9/05, H01R 4/72, H02G 15/188

(54) **PARTLY PRE-ASSEMBLED CABLE JOINT**
TEILWEISE VORMONTIERTE KABELVERBINDUNG
RACCORD DE CÂBLE PARTIELLEMENT PRÉ-ASSEMBLÉ

(43) Date of publication of application: 26.02.2020
(73) Proprietor: Tyco Electronics Raychem GmbH, 85521 Ottobrunn (DE)
(72) Inventor: SIMONSOHN, Thilo, 81735 München (DE)
(74) Representative: Grünecker Patent- und Rechtsanwälte PartG mbB

(56) References cited:
- EP-A1- 3 096 405
- EP-A2- 0 272 131
- WO-A1-2011/069547
- DE-U1- 7 608 208
- JP-A- H11 234 885
- JP-A- 2001 231 123
- US-A1- 2013 295 790
- US-A1- 2017 317 481

## Description

This invention relates to improving a shield connection for a heatshrink joint of at least two power cable terminals, e. g. for Medium Voltage (MV) applications, and in particular to a partly pre-assembled cable joint.

Conventional power cables usually comprise multiple layers. The core of the cable comprises the actual single conductor or set of conductors.

The next layer is a layer of carbon filled semiconductive material (here, the term "semiconductive" refers to a partially conductive material). The semiconductive layer is able to prevent voltage peaks by equalizing the electric field around the cable conductor(s). The next layer is the electrical insulation. Its wall thickness depends on the voltage class and the material type. The next layer is a further electrically conductive layer which serves as a shielding. Typically, a number metal wires or metallic tapes are positioned around the conductive layer. These are able to carry a defined electrical current. The outer semiconductive layer serves to shield the environment of the cable against electromagnetic radiation emitted from the cable core. The outmost layer is a further electrically insulating layer, which builds the jacket of the cable. It mainly serves as environmental seal, both mechanically and electrically.

A major part of conventional MV joints comprise heatshrink joint bodies with separate mastics, stress control sleeves or patches underneath. Onto these joint bodies, electrically conductive (metal) meshes are taped or metallic sockets are being positioned. Shield wires are lead from one end of the joint to the other and are connected to the shield wires or tape shields. Finally, the entire connection area is covered by an outer protection sleeve, also referred to as rejacketing sleeve. The heatshrink joint bodies may be formed from a single multiple layered product or are being built from two or more sleeves of various materials (insulating, semiconductive).

Another major part of the MV joints comprise cold applied joint bodies which are either built from extruded (multi-layered) sleeves, or the joint bodies are molded parts having semiconductive parts overmolded.

The following paragraphs describe in more detail how two terminals may be connected to each other using a heatshrink joint body.

First, the outer insulating rejacketing layer is removed 20-60 cm from the end of each terminal. Then, depending on the cable construction, the cable jacket is being removed and the shield wires are being folded back. Subsequently, the inner semiconductive layer is removed from the terminal to about 40 mm away from the cable jacket. Then the edge line of the inner semiconductive layer may be taped with a stripe of mastic in order to void fill the step between semiconductive layer and the insulation layer and to cover (sharp) edges which can lead to voltage peaks, miniature flashes, and breakdowns.

In case of cables with tape shielding, the cable jacket is removed in a comparable manner as with wire shielded cables. The metallic tape shield may then be accessed e. g. through slits in the cable jacket.

Then, a heatshrink stress control sleeve may be positioned and shrunk on the cable by applying heat with a torch. Subsequently, the joint body and outer sleeve is put onto one terminal end. Then, the cable cores are connected with a connector of e. g. shear bolt technology, which comprises a cylindrical jacket with screws in radial direction. For each of the cable cores , one cable from one terminal is put into one end of the connector, and the corresponding cable from the other terminal is put into the other end of the connector. Each screw is turned into the connector until it shears-off. The remaining indentations from the screws are filled with filler putty, to smoothen the connection, again to prevent voltage peaks and to improve the shape of the installed mastic and heatshrink sleeves.

Subsequently, the shear bolt connector may be enwrapped with a stress control patch. This could also be done by another heatshrink sleeve with stress grading properties. Then, a joint body, a muffle consisting of multiple layers of different materials, is drawn over the shear bolt connector, until it covers the whole space from the end of the cable jacket / inner semiconductive layer of the first cable to the cable jacket / end of the inner semiconductive layer of the second cable. In other executions, multiple heatshrink sleeves are installed subsequently.

Then, a copper mesh shielding may be applied, in the form of a copper band, which is wrapped around the joint body. This may be done in multiple partially overlapping winds. It may enclose the shield wires, which are connected directly with a connector of similar type like the connector for the conductor.

In the case of tape shielded cables the shields may be contacted with metal blanks having raised portions, which puncture the tape shield layer and e.g. having short metallic braids. Then typically metal sockets are positioned over the joint body. The connection of the braid ends with the short braids of the metal blanks contacting the tape shield layers is done by roll springs.

Finally, the outer sealing sleeve is drawn over the jointing area. Typically, these sleeves seal for about 100 mm on each cable jacket. This again may be shrunk by applying heat with a torch.

Heatshrinking with a torch is hazardous. It may harm the installer and it may produce fumes. Also in case of improper handling, it may harm the heatshrink products e.g. by overheating causing blisters. Another topic is that heatshrinking is skill sensitive. Especially shrinking the products majorly evenly around the circumference requires proper jointer skills and experience. These problems may be approached in the future by using electrical heating integrated into the heat shrink joint products. Among the approaches towards implementing heatshrink joint bodies through integrated electrical heating, there is one option where the rejacketing sleeve or at least parts of it are pre-positioned/pre-shrunk onto the joint body. In this case, as the main problem is to maintain the continuity of the outer shield, as a sequential installation step after installing the joint body and before the installing the rejacketing sleeve like with the standard heatshrink joints is not possible any more.

US 7476 114 B1 discloses an integral, unitary cover assembly for covering an electrical connection between first and second electrical cables each having a primary conductor and a neutral conductor includes an inner elastomeric sleeve, an outer elastomeric sleeve and a duct member. The inner sleeve defines a cable passage to receive the electrical connection and the primary conductors of the first and second cables. The outer sleeve surrounds the inner sleeve. The duct member is interposed between the inner and outer sleeves. The duct member defines a neutral conductor passage configured to receive at least one of the neutral conductors there through. In some embodiments of the invention, the cover assembly is a cold shrink cover assembly.

However, cold shrink cover assemblies suffer from performance issues and from having higher production cost. Hence, it is desirable to combine the idea of a channel guiding a conductor between the two conductive shielding layers of the two cables with a heat shrinking approach. Furthermore, tailored designs for the connection of the terminals of the connector with the conductive shielding layers are needed to optimize the installation procedure for cable joints.

DE 76 08 208 U1 describes a cable joint according to the preamble of claim 1, including a plastic-insulated medium-voltage cable with at least one prefabricated connecting sleeve, consisting of a connecting sleeve, surrounding the connection point of two cable ends, with a semi-conductive, tubular shaped material within a hollow body made of shrinkable material which is sealed off from the outside.

JP 2001 231123 A describes a water-tight normal temperature thermo-shrink insulation cylinder and a cable connector using the same that assures excellent water-tight characteristic and efficiency for connection and water-tight processes in order to realize easier cable connection and water-tight process even in the area where use of heat source is restricted.

JP H11 234885 describes how to obtain an improved joint construction in which the joint parts of shield layers can maintain stable electrical contacts for a long time.

EP 0272131 A2 describes a joint between high voltage cables is formed by employing a connector having the same diameter as the cable dielectric. A layer of stress controlling material extends from the cable screen on one side of the joint, along the cable dielectric, across the connector, along the dielectric of the other cable and on to the screen of the other cable.

US 2013/295790 A1 describes a disconnectable joint system includes first and second connectors and a coupling fastener. The first connector defines a first conductor bore to receive a first cable conductor, and a first coupling portion including a first coupling bore and a first integral interlock feature. The second connector defines a second conductor bore to receive a second cable conductor, and a second coupling portion including a second coupling bore and a second integral interlock feature.

Consequently, the problem underlying the present invention is to provide a cable joint body and a cable joint, which are compatible with torchless heatshrinking technologies done in one installation sequence, at the same time being economic to fabricate, easy to install, and safe and long-term stable after being installed. As will be seen later, at least some of the proposed concepts may possibly be installed without torchless heatshrinking technologies by using hot air, a gas torch or other means to generate heat.

This object is solved by the subject matter of the independent claim 1. Advantageous embodiments of the present invention are the subject matter of the dependent claims. Two options are considered according to the present invention.

An electrically conductive, preferably metallic, element (also referred to as "conductive element" in the following) can be te- pre-installed in the joint assembly before delivery to customers. This element can be a rod, a number of wires, a braid and/or a number of stripes. It is beneficial to have this element having a certain elasticity to allow for conforming to the outer shape of the installed joint body to some extent. Otherwise, this element may cause areas of increased stretch of the rejacketing sleeve, which deforms and/or may cause puncture of it during and/or after the installation.

According to this invention, an electrically conductive, preferably metallic, element is pushed through a channel between joint body and rejacketing sleeve prior to installation while the joint assembly has a tunnel. After installation of the joint body and the rejacketing sleeve, the channel is shrunk to a minimal size.

In particular, the present invention provides a cable joint for covering a connection of at least two power cables, each power cable comprising at least one electrically conductive shielding layer. A cable joint body comprises a first joint body (also referred to as first insulating sleeve), covered by a rejacketing sleeve, wherein the rejacketing sleeve forms at least one channel along a longitudinal axis of the insulating sleeve, the channel being configured to contain and receive a conductive element, which is connectable to the electrically conductive shielding wires or tape layers of the two cables, wherein the joint body comprises a heatshrink layer, and wherein the channel is configured to be collapsed after shrinking the product. This has the advantage that the rejacketing sleeve is easily shrunk via application of heat in the standard way. It also guarantees that the air pockets underneath the rejacketing sleeve are reduced to a minimum after installation. This is helpful for a better heat transfer from the interior of the joint to the environment during service as well as being mechanically more robust when having minimal air pockets underneath the rejacketing sleeve.

This configuration has the advantage that at least parts of the rejacketing sleeve are pre-installed on the heatshrink joint body. Thereby, the installation of the cable joint on-site can be done more quickly. The configuration also ensures that the continuity of the outer shielding, which is required to keep the outer shielding at the same potential everywhere, can be maintained.

According to this invention, the diameter of the cable joint body can be decreased by application of heat. This allows a simple way of fitting the cable joint body to the joint of the core cable and adapting the size of the cable joint to the size and shape of the core cable including the above mentioned means e. g. for connecting the core and providing the stress grading.

In a further embodiment, said channel contains a metal element which extends from a first terminal of the channel to a second terminal of the channel, being configured to connect the conductive shielding layer of the two cables. This has the advantage that the conductive element between the outer shieldings of the two cables is already pre-installed, which facilitates an even faster installation of the cable joint on-site and avoids any potential problems arising from the insertion of the conductor.

This invention also relates to a cable joint, comprising a cable joint body as described above, as well as at least one electrically conductive connector configured to electrically connect the shieldings of the at least two cables.

As already mentioned above, this arrangement has the advantage that the connection between the at least two cables can be covered by an insulating sleeve (joint body) in a particularly cost effective and secure manner requiring less installation steps and thus reducing risk of installation errors, at the same time providing continuity of the shielding meeting standard and customer specific specifications.

In a further embodiment of the cable joint, the first cable shielding is connected to the second cable shielding via a conductive element inserted into the channel formed by the cable joint body and the pre-installed rejacketing sleeve in the course of the installation of the joint in the field. This has the advantage that the cable shieldings of the two cables are connected, which is important to keep both of them at the same electrostatic potential.

In a further embodiment, a first terminal of the conductive element is fixed to the first cable via a roll spring. This facilitates quick and stable installation of the cable joint on-site.

In a further embodiment, the cable joint further comprises a second and a third conductive element and a first semiconductive layer, wherein the second conductive element surrounds a terminal of the first conductive layer, the first semiconductive layer partially covers the second conductive element, the roll spring surrounds a terminal of the first semiconductive layer, the first terminal of the conductive element is clamped between the roll spring and the terminal of the first semiconductive layer, and the conductive element and the second conductive element are connected via a third conductive element, wherein a first terminal of the third conductive element is clamped between the roll spring and the terminal of the semiconductive layer, and wherein a second terminal of the third conductive element is fixed on the second conductive element. This further facilitates quick and stable installation of the cable joint on-site.

In a further embodiment, the cable joint further comprises a fourth conductive element, wherein the fourth conductive element surrounds a terminal of the second conductive layer, the tape shield of the second cable partially surrounds the fourth conductive element, and the second terminal of the conductive element is fixed on the fourth conductive element. This facilitates a simple fixation of the conductive element at the second cable.

In a further embodiment, a first terminal of the rejacketing sleeve and a terminal of the first conductive layer are covered by a first terminal associated rejacketing sleeve. This has the advantage that the transition from the rejacketing sleeve to the first conductive layer is waterproof.

In a further embodiment, a second terminal of the rejacketing sleeve and a terminal of the second conductive layer are covered by a second terminal associated rejacketing sleeve. This has the advantage that the transition from the rejacketing sleeve to the second conductive layer is waterproof.

In a further embodiment, the cable joint further comprises a connector element containing a hole and a screw, wherein the connector element is fixed to the second conductive element, and the first terminal of the conductive element is inserted into said hole and fixed with the screw. This facilitates a quick fixation of the connector element to the second cable.

In a further embodiment, said hole points in axial direction. This has the advantage that the hole points in the same direction as the conductor, such that bending the conductor is not required.

In a further embodiment, said hole points in radial direction. This is advantageous for easy fixation of the connector at the second cable from the side.

In a further embodiment, said hole points in azimuthal direction. Also this is advantageous for easy fixation of the connector at the second cable from the side.

In a further embodiment of the invention, the first cable shielding comprises conductive wires running along the axis of the first cable, and the second cable shielding comprises conductive wires running along the axis of the second cable, wherein the wires from the first cable shielding of the first cable may not extend beyond the region of the first insulating layer not covered by the first conductive layer and are pratted into a first braid, and the wires from the second cable shielding of the second cable extend beyond the region of the second insulating layer not covered by the second conductive layer and are pratted into a second braid, wherein the second braid runs through the channel of the cable joint to the first cable, where its terminal is connected to the terminal of the first braid. This has the advantage that the conductive element connecting the first and the second cable shielding is made of material from the second cable, such no additional material is required, which reduces costs and avoids a further connector which would be needed if it would be a separate element.

In a further embodiment of the invention, parts of the connector are encapsulated. This facilitates to smoothen the surface of the connector, especially at its terminals, in order to avoid voltage peaks and to reduce the thinning of the rejacketing sleeve at edge of the connector as well as reducing the number of sharp edges possibly getting into contact with the rejacketing sleeve.

In further embodiments of the invention, the shield connector is a rod or a stack of blanks. This has the advantage that the shield connector is more stable against bending and may be more easily pushed into the channel, in case the connector is inserted into the channel during installation of the cable joint. Lower cost may be another advantage.

In a further embodiment of the invention, if the shield connector is a braid, its second terminal is fixed to the terminal of the second cable via a cable lug. This has the advantage that the second terminal of the shield connector may be easily fixed to the second cable shielding via a screw.

In a further embodiment of the invention, if the shield connector is a stack of blanks, its second terminal is fixed to the terminal of the second cable via slits at the terminal of the blanks. This has the advantage that the second terminal of the shield connector may be easily fixed to the second cable via a screw as it can cope with tolerances of the length more easily and may eliminate the need for a separate connector piece.

In a further embodiment of the invention, the region of the first insulating layer not covered by the first conductive layer, adjacent to the region of the first insulating layer covered by the first conductive layer, as well as the region of the second insulating layer not covered by the second conductive layer, adjacent to the region of the second insulating layer covered by the second conductive layer, are surrounded by mastics. This facilitates to smoothen the surfaces in the cable joint in order to avoid voltage peaks and to facilitate stress grading.

The accompanying drawings are incorporated into the specification and form part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Further features and advantages will become apparent from the following more particular description of the various embodiments of the invention, as illustrated in the accompanying drawings, in which like references refer to like elements, and wherein:
- **Fig. 1**: shows a cross section along a longitudinal axis of a heat shrink joint body with a conductive element pre-installed on it;
- **Fig. 2**: shows a cross section normal to a longitudinal axis of a heat shrink joint body with a conductive element pre-installed on it;
- **Fig. 3**: shows a cross section along a longitudinal axis of a heat shrink joint body with a channel between joint body and rejacketing sleeve without conductive element pre-installed in the joint assembly;
- **Fig. 4**: shows a cross section normal to a longitudinal axis of a heat shrink joint body with a channel between joint body and rejacketing sleeve without conductive element pre-installed in the joint assembly;
- **Fig. 5**: shows a bolt connector from the side;
- **Fig. 6**: shows a cut through a bolt connector;
- **Fig. 7**: shows a cross section along a longitudinal axis of a cable connection where the metallic element connecting the outer shieldings of the two cables comprises terminals of the metal wires from the shielding of the second cable;
- **Fig. 8**: shows a cut of the cable connection shown in Fig. 7 along the line VIII-VIII;
- **Fig. 9**: shows a cross section along a longitudinal axis of a cable connection where the conductive element connecting the outer shieldings of the two cables is not part of any of the outer shieldings of the first or the second cable;
- **Fig. 10**: shows a cut of the cable connection shown in Fig. 9 along the line X-X;
- **Fig. 11**: shows a cross section of a joint cheesegrater that has a special connection element soldered or welded to it, wherein a conductive element can be fixed via a screw;
- **Fig. 12**: shows a side view of a joint cheesegrater shown in Fig. 11 that has a special connection element soldered or welded to it, wherein a conductive element can be fixed via a screw;
- **Fig. 13**: shows a top view of a further joint cheesegrater that has a special connection element soldered or welded to it, wherein a conductive element can be fixed via a screw, according to a second embodiment;
- **Fig. 14**: shows a side view of a further joint cheesegrater that has a special connection element soldered or welded to it, wherein a conductive element can be fixed via a screw, according to a third embodiment;
- **Fig. 15**: shows a side view of a joint cheesegrater that has a special connection element soldered or welded to it, wherein a conductive element can be fixed via a screw, according to a fourth embodiment;
- **Fig. 16**: shows a side view of a joint cheesegrater that has a special connection element soldered or welded to it, wherein a conductive element can be fixed via a screw, according to a fifth embodiment;
- **Fig. 17**: shows a side view of a joint cheesegrater that has a special connection element soldered or welded to it, wherein a conductive element can be fixed via a screw, according to a sixth embodiment;
- **Fig. 18**: illustrates the fixation of a stiff conductive element without a lug at its terminal to a special connection element at a cheesegrater via a screw;
- **Fig. 19**: illustrates a second embodiment of a conductive element with a lug at its terminal that can could be fixed with a screw like shown in Fig. 18.

The present invention will now be explained in more detail with reference to the Figures.

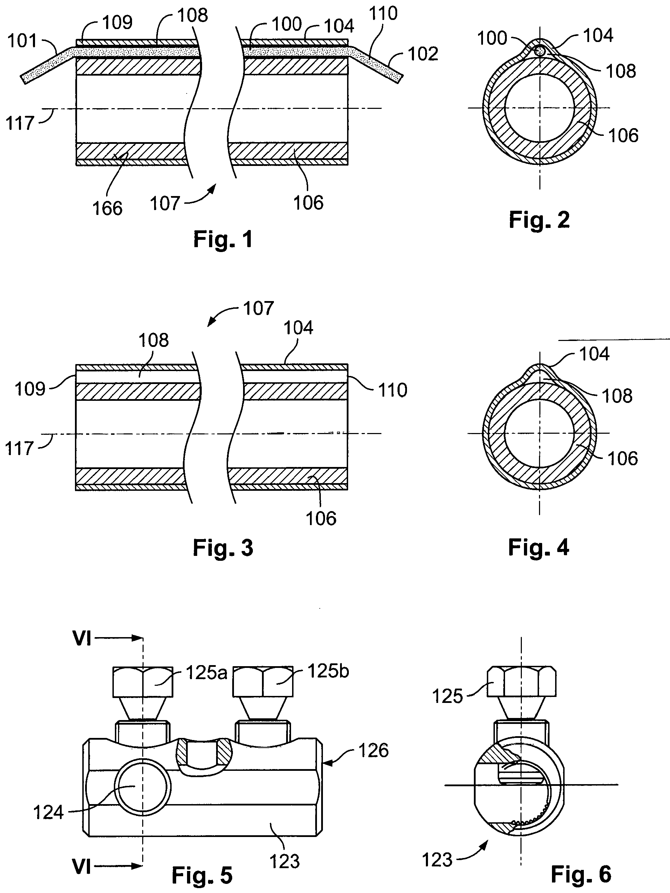

In particular, Fig. 1 and 2 show cross sections through a heat shrink joint body 106 with a metallic conductive element 100 pre-installed on it. The conductive element 100 may for instance be formed from a metallic braid, a wire, or a plurality of wires or a plurality of metal foils or blanks. However, it is clear for a person skilled in the art, that any other electrically conductive material and construction may also be used.

In Fig. 1, a cross section along the longitudinal axis 117 is shown, and in Fig. 2, a cross section normal to the longitudinal axis 117 is depicted. A passage for the cable cores (not shown in the Figures) is enclosed by an insulating sleeve 106 on which a rejacketing sleeve 104 comprising an insulating material is positioned. The rejacketing sleeve 104 may additionally comprise an inner electrically conductive layer 166 for providing a complete shielding around the cable joint body. The electrically conductive layer 166 may for instance be formed by a metal mesh or a film that encloses at least parts of the joint body and at least parts of the channel and at least parts of an electrically conductive outer layer of the first insulating sleeve 106. Preferably, the conductive layer 166 encloses almost the entire outer surface of the first insulating sleeve 106 and almost the entire channel and is executed as one metal film with a thickness between 5 microns and up to 200 microns, preferably in the magnitude of 15 microns to 100 microns. The metal may be preferably copper without tinning in order to prevent unfortunate combinations of metals, as shielding wires are in most cases formed from copper.

As can be seen from Fig. 1, the rejacketing sleeve 104 forms a passage 108 through which the metallic element 100 extends. This electrically conductive element 100 can be a rod, a number of wires, a braid and/or a number of stripes. It is beneficial to have this element 100 having a certain elasticity to allow for conforming to the outer shape of the installed joint body to some extend. Otherwise this element 100 may cause areas of increased stretch of the rejacketing sleeve 104 which deforms and/or may cause puncture of it during and/or after the installation or create too much thinning of the sleeve which may lead to splitting after the installation and when buried in the ground and/or it may lead to a reduction of the wall thickness such that this cable joint would not pass electrical cable jacket tests e.g. at 5 kVor 10 kV.

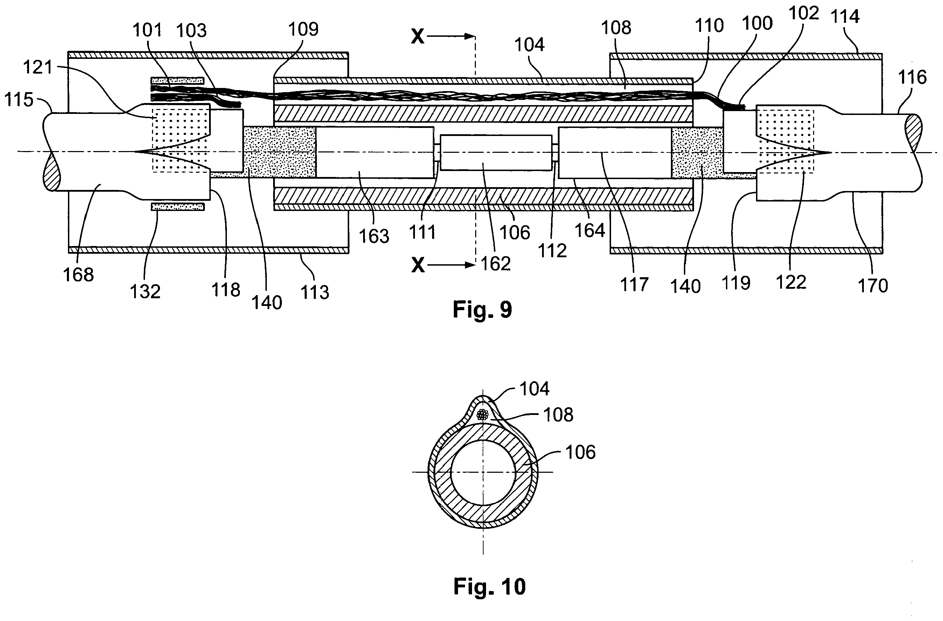

This configuration has the advantage that the rejacketing sleeve 104 is pre-installed on the heatshrink joint body 106. Thereby, the installation of the cable joint can be done more quickly on-site, knowing that in most applications further pieces of rejacketing sleeve like the one shown in Fig. 9 are required to be installed. The configuration also ensures that the continuity of the outer shielding, which is required to keep the outer shielding at the same potential everywhere, can be maintained. Furthermore, the complete cable joint body 107 can conveniently be shrunk by application of heat in a one step installation of the joint body and the rejacketing sleeve. It also eliminates the need for e.g. taping a metal mesh like with many of the standard heatshrink joint constructions. It subsequently eliminates the need for waiting until the joint body has cooled down to an affordable temperature before taping a metal mesh. Thus this construction allows to install in one heatshrink process, eliminates the need for taping a metal mesh or positioning a metal braid, it reduces the risk of installation errors and saves installation time. In case of installation by integrated heater systems, this construction allows to fully automate some of the steps of heatshrink installation of joints.

According to a further advantageous embodiment, the cable joint body 107 may be provided to a customer without a conductive element 100 of its own. In this case, wires of a cable shielding which is already present on site may be introduced into the channel 108. Fig. 3 and 4 show cross sections through a cable joint body 107 with a channel 108 between the first insulation sleeve 106 and the rejacketing sleeve 104 without metallic element (a braid or the like) 100 being pre-installed in the joint assembly.

This arrangement allows to push an electrically conductive element through it in the course of the installation of the joint in the field prior to shrinking the joint body 106 and the rejacketing sleeve 104. According to this invention, the shrinking of the joint body 106 and of the rejacketing sleeve 104 creates a certain pressure onto the metallic element 100 to then create an electrical contact between it and the i.e. metal mesh or film which may enclose the joint body 106 and the channel 108 at least partly which then creates contact to the conductive shielding layer of the joint body.

In order to select the appropriate connection of the shields of the cables, the type of shielding is to be considered. The majority of the MV power cables have either a wire shield or a tape shield. In case of wire shielding, the connection of the metallic element can be done through using standard connectors (mechanical connectors such as bolt connectors or crimp connectors).

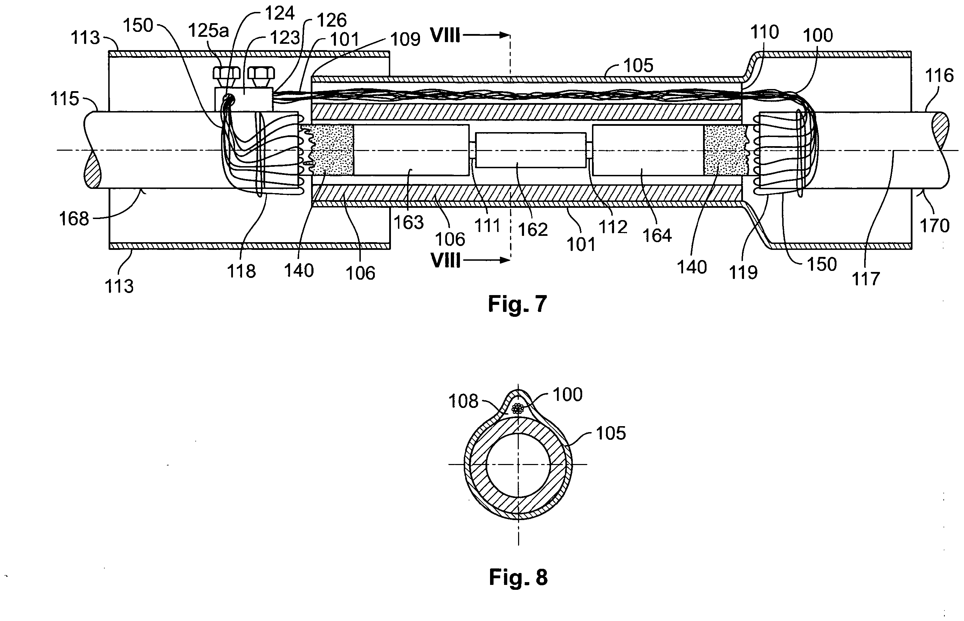

For instance, Fig. 5 and 6 show a bolt connector 123 with two shear off screws 125. As will be apparent in more detail from the following Fig. 7, the bolt connector 123 receives the electrically conductive element 100 through an inlet 126. The wires from the screen shield are inserted into the opening 124. This design is chosen to reduce the overall length of the screen wire connection. The opening on the side (124) also allows an easier insertion of the shield wires of the one cable as rotation is a degree of freedom when installing such joints.

Fig. 7 and 8 show sectional views of a cable connection connecting two cables 115, 116 according to a first advantageous embodiment. According to this embodiment, the shield wires of one of the cable 115, 116 are used as the metallic element 100.

A (bolt) connector 162 electrically connects the cable cores 111, 112 on the two cables 115, 116. The bolt connector 162 is sandwiched between the end regions of two insulating layers 163, 164 which surround the cable cores 111, 112. Each of the insulating layers 163, 164 is surrounded by a semiconductive shielding layer 140. Shield wires 118, 119 running parallel to the cable axis 117 are located on the outside of the shielding layers 140. The shield wires 118, 119, are surrounded by cable jackets 168, 170.

Each of the cable jackets 168, 170 is removed from a region close to the cable terminals, and on each side the shield wires 118, 119 are tucked back, and fixed with a wire wrapped azimuthally around the corresponding cable jacket 115, 116. The part of the shield wires behind the wire is patted into a braid 150, 100.

At the boundary between the region of the insulating layers 163, 164 covered by the semiconductive layers 140 and the region where the cable jackets 168, 170 have been removed, various means for stress grading may applied. This may be i.e. taping mastics and installing short pieces of stress grading heatshrink sleeves. This is in order to smoothen the surface and fill voids to prevent voltage peaks.

The region of the insulating layers 163, 164 of the two cable terminals not covered by the cable jackets 115, 116, as well as the bolt connector 162, which connects the cables cores 111, 112, are covered by the electrically insulating heatshrink joint body 106. The heatshrink joint body 106 is covered by the rejacketing sleeve 104. The braid 100 from the second terminal runs parallel to the cable axis 117 toward the first terminal, through a channel 108 formed by the rejacketing sleeve 104.

At the first cable jacket 168, a bolt connector 123 with two screws 125 in radial orientation (as shown in Fig. 5 and 6) is mounted, with its longitudinal axis being parallel to the cable axis 117.

The bolt connector 123 has a first hole 124 in azimuthal direction and a second hole 126 in axial direction. The first screw 125a of the bolt connector resides at the position where both holes 124, 126 cross each other. The second screw 125b resides at a position toward the end of the cable terminal. The terminal of the braid 100 from the second terminal is inserted in the hole 126 in axial direction, and the braid 150 from the first terminal is inserted in the hole 124 in azimuthal direction. Both braids 150, 100 are fixed via screws 125a, 125b.

The bolt connector fixing the braids 150, 100 on the first terminal, and a first terminal of the heatshrink joint body 106, are covered by an additional rejacketing sleeve 113 comprising an insulating material. The additional rejacketing sleeve 113 comprises a heat shrink material.

For cables 115, 116, which do not have a metal wire shield, but a metal tape shielding layer, a cable joint according to a second embodiment is proposed according to the present invention. This arrangement with some adaptations may of course also be used for wire shielded cables.

Fig. 9 and 10 show a cable connection according to the second embodiment. At both terminals, the cable jackets 168, 170 are removed from an area close to the ends. Further, the cable jackets are slit and bent apart. This is to allow mounting electrically conductive contacting elements, so-called cheesegraters 121, 122. These serve as electrical contact elements contacting the tape shielding of the cables which is located under the cable jackets 168, 170. A cheesegrater is typically a metal blank with an area having a number of sharp elements to protrude through the tape shield of the cable.

These figures show a cable connection including a (bolt) connector 162 which connects the two terminals of the cable cores 111, 112. Each cable is surrounded by an insulating layer 163, 164 and an i.e. co-extruded semiconductive layer 140. The edge of it may be taped with a mastic.

The second end of the first braid 103 is fixed on the cheesegrater 121 of the first terminal. The first end of the first braid is positioned on the outside of the cable jacket 168 of the first cable 115.

On the cheesegrater 122 of the second terminal, the second end of a second braid 100 is fixed. The second braid 100 is running through a channel 108 formed between the rejacketing sleeve 104 and the heat shrink joint body 106. The first end of the second braid 100 is positioned on top of the cable jacket 168 and on top or close to the first end of the first braid 103. The fixing and electrical contact is done via a roll spring 132

The rejacketing sleeve 104 is dissociated from both terminals. Each of the ends of the rejacketing sleeve 104 is covered by a second rejacketing sleeve 113, 114 associated with the respective terminal which also covers the cheesegraters 121, 122 and a part of the cable jackets 168, 170 at the side of the cheesegrater distant from the corresponding cable terminal.

Alternatively to a braid, the shield connector 100 may also be a rod or a stack of blanks 210. This has the advantage that the shield connector 100 is more stable against bending and may be more easily pushed into the channel 108, in case the connector 100 is inserted into the channel during installation of the cable joint. The shield connector 100 may also be pre-installed in the channel 108 and may have cheesegraters pre-installed on either end by welding or soldering or the like.

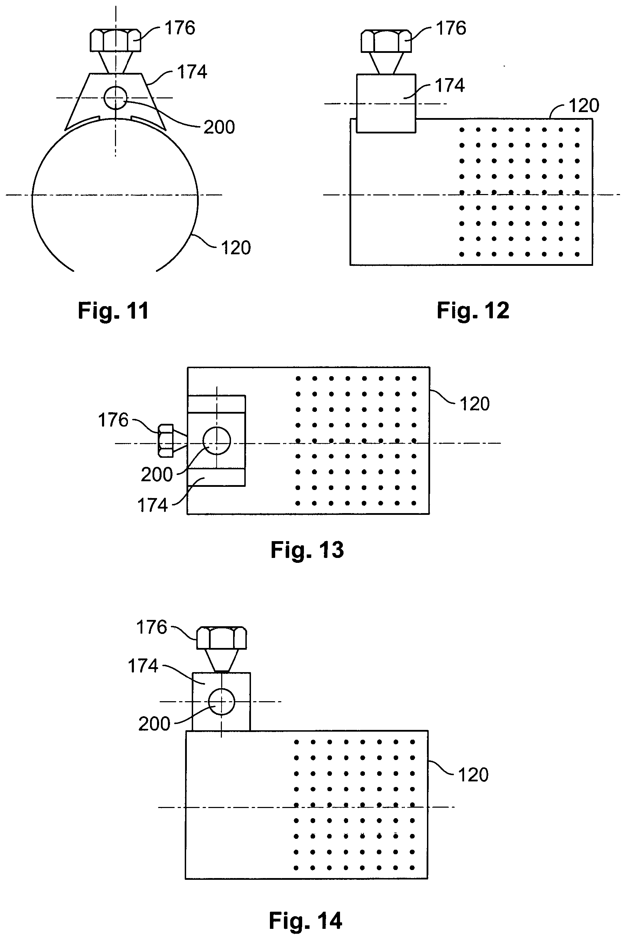

Alternatively, the terminals of the braids may be fixed to the cheesegraters 121, 122 using bolt connectors 174 with, e.g., a single screw 176, as shown in Fig. 11 to 17.

Fig. 11 shows a cross section through a cheesegrater-associated bolt connector 174, and Fig. 12 to 17 depict further views of such connectors. The connector 174 shown in Fig. 11 corresponds to the connector shown in Fig. 12. Fig. 11 and 12 indicate the hole 200 into which a braid or a rod or a number of wires or a stack of blanks may be inserted. This hole 200 may be parallel to the cable axis, as shown in Fig. 11 and Fig. 12. This has the advantage that the hole 200 points in the same direction as the conductive element 100, such that bending the conductive element 100 is not required.

Alternatively, the hole 200 may be oriented in radial (Fig. 13) or azimuthal orientation (Fig. 14). This has the advantage that the hole 200 points in a different direction than the axis of the cable, such that the terminal of the conductive element 100 may be fixed more tightly in the hole 200, as there is also a form-fit. This helps in case the cable terminals are pulled apart from each other.

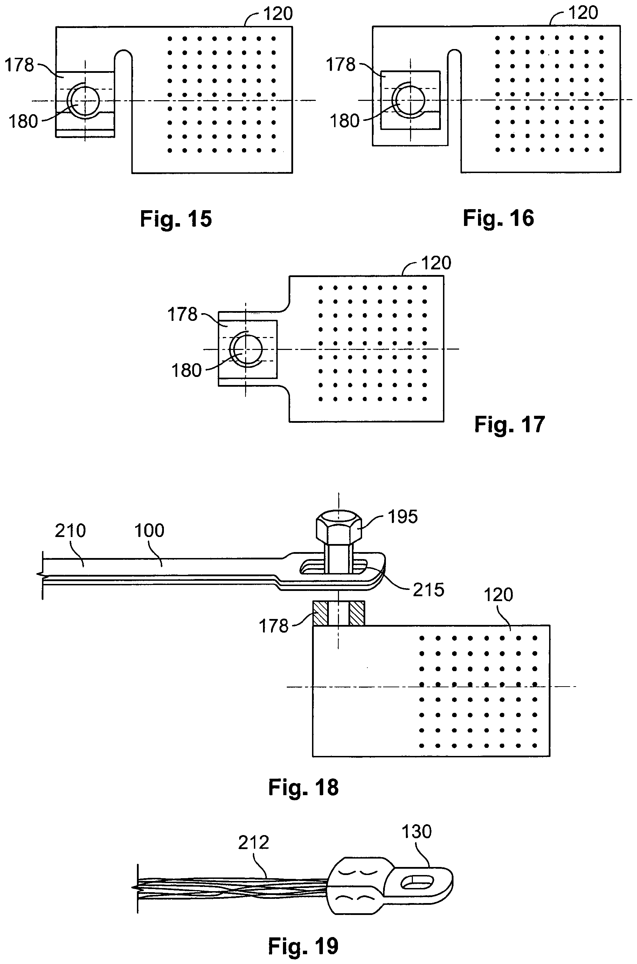

Further embodiments of cheesegrater-associated bolt connectors 178 with bores 180 for a screw are shown in Fig. 15, 16, and 17. As indicated in all three Figures the bolt connector 178 may be mounted on a part of the cheesegrater 120 with only a small connection between the part of the cheesegrater fixed on the cable and the part of the cheesegrater 120 fixed to the bolt connector 178 to which the terminal of the connector is fixed. Executions like in Fig. 15 and 16 allow more flexibility of the main part of the cheesegrater with respect to the part where the bolt connector is fixed than the execution shown in Fig.17. Even the execution shown in Fig. 17 allows more flexibility of the main part of the cheesegrater with respect to the part where the bolt connector is fixed than if the bolt connector would be fixed to a standard blank. Hence, all the embodiments shown in Fig. 15, 16, and 17 simplify the installation of the cheesegrater through bending according to the diameter of the semiconductive layer of the cable.

Fig. 18 shows a further embodiment of the invention, wherein the shield connector is a stack of blanks 210. Its second terminal is fixed to the terminal of the second cable via slits at the terminals of the blanks. This has the advantage that the second terminal of the shield connector 100 may be easily fixed to the second cable via a screw. An opening 215 is provided, which allows a screw 195 to pass through to the connector 178. By using elongated holes, tolerances may be dealt with in an easy way. This design also eliminates the need for a bolt connector 174, but only requires a simpler and lower cost design.

Fig. 19 shows that in a further embodiment of the invention, if the shield connector is a braid 212, its second terminal may be fixed to the terminal of the second cable via a cable lug 130. This has the advantage that the second terminal of the shield connector may be easily fixed to the second cable via a screw.

In summary, the present invention provides heat shrink joint products that establish a continuity of the current carrying shielding as well as of the semiconductive shielding of the cable which are to be connected. The current of the shield wires or tapes is guided by the electrically conductive element, whereas the continuity of the semiconductive layers of the cables may be ensured by means of a semiconductive layer provided at the outside of the joint body.

The present invention may be used with integrated heating systems especially since the rejacketing sleeve is pre-installed. However, some of the concepts described above may also be used with standard products and standard installation methods. The concepts described above are designed primarily for medium voltage (MV) joint bodies designed for voltages from 12 to 42 kV. It is clear for a person skilled in the art, however, that the principles of the present invention are also applicable for other voltage classes and products.

**Reference numerals**

| **Reference numeral** | **Description** |
|---|---|
| 100 | Conductive element |
| 101 | First terminal of conductive element |
| 102 | Second terminal of conductive element |
| 103 | First braid, third conductive element |
| 104 | Main rejacketing sleeve |
| 105 | Main rejacketing sleeve integrated with second terminal associated rejacketing sleeve |
| 106 | Heat shrink joint body; first insulating sleeve |
| 107 | Cable joint body |
| 108 | Channel |
| 109 | First channel terminal |
| 110 | Second channel terminal |
| 111 | First cable conductor |
| 112 | Second cable conductor |
| 113 | Additional rejacketing sleeve |
| 114 | Additional rejacketing sleeve |
| 115 | First cable |
| 116 | Second cable |
| 117 | Longitudinal axis; cable axis |
| 118 | Shield wires |
| 119 | Shield wires |
| 120 | Cheesegrater |
| 121 | Cheesegrater on first cable terminal, second conductive element |
| 122 | Cheesegrater on second cable terminal, fourth conductive element |
| 123 | Shear bolt connector |
| 124 | Hole in shear bolt connector |
| 125 | Screw |
| 126 | Inlet |
| 130 | Cable lug |
| 132 | Roll spring |
| 135 | Insulating layer |
| 140 | Semiconductive shielding layer |
| 150 | Wire from screen shield |
| 160 | First conductor |
| 161 | Second conductor |
| 162 | Conductive connector |
| 163 | First insulating layer |
| 164 | Second insulating layer |
| 166 | Inner electrically conductive layer |
| 168 | First cable jacket |
| 170 | Second cable jacket |
| 174 | Bolt connector |
| 176 | Screw |
| 178 | Bolt connector |
| 180 | Bore |
| 200 | Hole |
| 210 | Stack of blanks |
| 212 | Braid |
| 215 | Opening |

## Claims

1. Cable joint for covering a connection of at least a first and a second power cable (115, 116), each power cable (115, 116) comprising at least one electrically conductive shielding (118, 119), the cable joint comprising:
a cable joint body (107) comprising a first insulating sleeve (106), a rejacketing sleeve (104), wherein the first insulating sleeve (106) is at least partly encompassed by the rejacketing sleeve (104), and at least one electrically conductive connector (162), configured to electrically connect the at least two power cables (115, 116)
wherein the first insulating sleeve (106) comprises a heatshrink layer,
wherein the rejacketing sleeve (104) comprises a heat shrink material, and
**characterized in that**
the rejacketing sleeve (104) is preinstalled on the first insulating sleeve (106) to form a channel (108) along a longitudinal axis (117) of the first insulating sleeve (106), the channel (108) being configured to receive and contain a conductive element (100), which is connectable to the electrically conductive shieldings (118, 119) of the two cables (115, 116),
wherein the channel (108) is configured to be collapsed after shrinking the insulating sleeve (106) and the rejacketing sleeve (104).

2. Cable joint according to claim 1, where said channel (108) contains the conductive element (100) which extends from a first terminal (109) of the channel to a second terminal (110) of the channel, configured to connect the conductive shieldings (118, 119) of the at least two cables.

3. Cable joint according to one of the preceding claims, wherein the cable joint body (107) further comprises a metal mesh or an electrically conductive film that at least partly encloses the insulating sleeve (106) and/or at least partly the channel (108).

4. Cable joint according to one of the preceding claims, further comprising a bolt connector (123), configured to be mounted on a first cable terminal, and to hold a first terminal of the conductive element (100).

5. Cable joint according to one of the preceding claims, further comprising a roll spring (132), which is configured to surround a first cable (115) and to hold a first terminal (101) of the conductive element (100).

6. Cable joint according to claim 5, further comprising a second conductive element (121) and a third conductive element (103),
wherein the second conductive element (121) is configured to surround a terminal of the conductive layer of a first cable terminal, wherein the roll spring (132) is configured to surround a terminal of a semiconductive layer (140) of the first cable terminal,
wherein the first terminal (101) of the conductive element (100) is configured to be clamped between the roll spring (132) and the semiconductive layer (140) of the first cable terminal, and wherein the conductive element (100) and the second conductive element (121) are connected via the third conductive element (103),
wherein a first end of the third conductive element (103) is configured to be clamped between the roll spring (132) and a first cable jacket (168) of the second cable terminal, and wherein a second end of the third conductive element (103) is fixed on the second conductive element (121).

7. Cable joint according to claim 6, further comprising a fourth conductive element (122),
wherein the fourth conductive element (122) is configured to surround a terminal of a semiconductive layer (140) of a second cable terminal,
wherein the fourth conductive element (122) is configured to be at least partially surrounded by a tape shield of the second cable terminal,
and wherein a second terminal (102) of the conductive element (100) is fixed on the fourth conductive element (122).

8. Cable joint according to one of the preceding claims, further comprising a first terminal associated rejacketing sleeve (113) configured to surround a first terminal of the rejacketing sleeve (104) and a terminal of a conductive layer (118) of a first cable terminal.

9. Cable joint according to one of the preceding claims, further comprising a second terminal associated rejacketing sleeve (114) configured to surround the rejacketing sleeve (104) and a terminal of the conductive layer of a second cable terminal.

10. Cable joint according to claim 4, wherein the bolt connector (123) further comprises at least one hole (124, 126) and at least one screw (125), wherein the bolt connector (123) is configured to be fixed to a wire (150) of electrically conductive shielding, and wherein the first terminal (101) of the conductive element (100) is configured to be inserted into said hole (126) and fixed with the screw (125).

11. Cable joint according to claim 10, wherein said hole (124) points in axial, radial, or azimuthal direction.

12. Cable joint according to one of the preceding claims, wherein the conductive element (100) comprises a braid and/or at least one electrically conductive sheet.

13. Cable joint according to one of the preceding claims, wherein the channel (108) of the cable joint body (107) is configured to contain a second braid (100) formed by electrically conductive wires from shield wires (119) of the second cable, running from the second cable to the first cable, wherein the second braid is configured to be connected to a first braid (103), formed by electrically conductive wires from shield wires (118) of the first cable.

14. Cable joint according to one of the preceding claims, wherein said conductive element (100) is attached to a cheesegrater (120; 122) by means of a screw connection (174, 176) or a welded connection.

## Patentansprüche

1. Kabelverbindung zum Abdecken einer Verbindung wenigstens eines ersten und eines zweiten Stromkabels (115, 116), wobei jedes Stromkabel (115, 116) wenigstens eine elektrisch leitende Abschirmung (118, 119) umfasst, und die Kabelverbindung umfasst:
einen Kabelverbindungs-Körper (107), der eine erste Isolier-Manschette (106) und eine Ummantelungs-Manschette (104) umfasst, wobei die erste Isolier-Manschette (106) wenigstens teilweise von der Ummantelungs-Manschette (104) umhüllt ist,
sowie wenigstens einen elektrisch leitenden Verbinder (162), der so ausgeführt ist, dass er die wenigstens zwei Stromkabel (115, 116) elektrisch verbindet,
wobei die erste Isolier-Manschette (106) eine Wärmeschrumpf-Schicht umfasst, und die Ummantelungs-Manschette (104) ein Wärmeschrumpf-Material umfasst, und
**dadurch gekennzeichnet, dass**
die Ummantelungs-Manschette (104) an der ersten Isolier-Manschette (106) vorinstalliert wird, um einen Kanal (108) entlang einer Längsachse (117) der ersten Isolier-Manschette (106) auszubilden,
wobei der Kanal (108) so ausgeführt ist, dass er ein leitendes Element (100) aufnimmt und einschließt, das mit den elektrisch leitenden Abschirmungen (118, 119) der zwei Kabel (115, 116) verbunden werden kann,
und der Kanal (108) so ausgeführt ist, dass er nach Schrumpfen der Isolier-Manschette (106) und der Ummantelungs-Manschette (104) zusammengedrückt wird.

2. Kabelverbindung nach Anspruch 1, wobei der Kanal (108) das leitende Element (100) einschließt, das sich von einem ersten Abschluss (109) des Kanals zu einem zweiten Abschluss (110) des Kanals erstreckt und so ausgeführt ist, dass es die leitenden Abschirmungen (118, 119) der wenigstens zwei Kabel verbindet.

3. Kabelverbindung nach einem der vorangehenden Ansprüche, wobei der Kabelverbindungs-Körper (107) des Weiteren ein Metallnetz oder eine elektrisch leitende Folie umfasst, die wenigstens teilweise die isolierende Hülse (106) und/oder wenigstens teilweise den Kanal (108) umschließt.

4. Kabelverbindung nach einem der vorangehenden Ansprüche, die des Weiteren einen Schraubverbinder (123) umfasst, der so ausgeführt ist, dass er an einem ersten Kabelabschluss montiert wird und einen ersten Abschluss des leitenden Elementes (100) hält.

5. Kabelverbindung nach einem der vorangehenden Ansprüche, die des Weiteren eine Rollfeder (132) umfasst, die so ausgeführt ist, dass sie ein erstes Kabel (115) umgibt und einen ersten Abschluss (101) des leitenden Elementes (100) hält.

6. Kabelverbindung nach Anspruch 5, die des Weiteren ein zweites leitendes Element (121) und ein drittes leitendes Element (103) umfasst,
wobei das zweite leitende Element (121) so ausgeführt ist, dass es einen Abschluss der leitenden Schicht eines ersten Kabelabschlusses umgibt, die Rollfeder (132) so ausgeführt ist, dass sie einen Abschluss einer halbleitenden Schicht (140) des ersten Kabelabschlusses umgibt,
der erste Abschluss (101) des leitenden Elementes (100) so ausgeführt ist, dass er zwischen der Rollfeder (132) und der halbleitenden Schicht (140) des ersten Kabelabschlusses eingeklemmt wird, und das leitende Element (100) und das zweite leitende Element (121) über das dritte leitende Element (103) verbunden sind,
ein erstes Ende des dritten leitenden Elementes (103) so ausgeführt ist, dass es zwischen der Rollfeder (132) und einem ersten Kabelmantel (168) des zweiten Kabelabschlusses eingeklemmt wird, und ein zweites Ende des dritten leitenden Elementes (103) an dem zweiten leitenden Element (121) befestigt ist.

7. Kabelverbindung nach Anspruch 6, die des Weiteren ein viertes leitendes Element (122) umfasst,
wobei das vierte leitende Element (122) so ausgeführt ist, dass es einen Abschluss einer halbleitenden Schicht (140) eines zweiten Kabelabschlusses umgibt,
das vierte leitende Element (122) so ausgeführt ist, dass es wenigstens teilweise von einer Bandabschirmung des zweiten Kabelabschlusses umgeben ist,
und ein zweiter Abschluss (102) des leitenden Elementes (100) an dem vierten leitenden Element (122) befestigt ist.

8. Kabelverbindung nach einem der vorangehenden Ansprüche, die des Weiteren eine einem ersten Abschluss zugeordnete Ummantelungs-Manschette (113) umfasst, die so ausgeführt ist, dass sie einen ersten Abschluss der Ummantelungs-Manschette (104) und einen Abschluss einer leitenden Schicht (118) eines ersten Kabelabschlusses umgibt.

9. Kabelverbindung nach einem der vorangehenden Ansprüche, die des Weiteren eine einem zweiten Abschluss zugeordnete Ummantelungs-Manschette (114) umfasst, die so ausgeführt ist, dass sie die Ummantelungs-Manschette (104) und einen Abschluss der leitenden Schicht (118) eines zweiten Kabelabschlusses umgibt.

10. Kabelverbindung nach Anspruch 4, wobei der Schraubverbinder (123) des Weiteren wenigstens ein Loch (124, 126) und wenigstens eine Schraube (125) umfasst,
der Schraubverbinder (123) so ausgeführt ist, dass er an einem Draht (150) einer elektrisch leitenden Abschirmung befestigt ist,
und der erste Abschluss (101) des leitenden Elementes (100) so ausgeführt ist, dass er in das Loch (126) eingeführt und mit der Schraube (125) befestigt wird.

11. Kabelverbindung nach Anspruch 10, wobei das Loch (124) in axialer, radialer oder azimutaler Richtung zeigt.

12. Kabelverbindung nach einem der vorangehenden Ansprüche, wobei das leitende Element (100) ein Geflecht und/oder wenigstens eine elektrisch leitende Folie umfasst.

13. Kabelverbindung nach einem der vorangehenden Ansprüche, wobei der Kanal (108) des Kabelverbindungs-Körper (107) so ausgeführt ist, dass er ein zweites Geflecht (100) enthält, das durch elektrisch leitende Drähte von Abschirmdrähten (119) des zweiten Kabels gebildet wird und von dem zweiten Kabel zu dem ersten Kabel verläuft, wobei das zweite Geflecht so ausgeführt ist, dass es mit einem ersten Geflecht (103) verbunden ist, das durch elektrisch leitende Drähte von Abschirmdrähten (118) des ersten Kabels gebildet wird.

14. Kabelverbindung nach einem der vorangehenden Ansprüche, wobei das leitende Element (100) mittels einer Schraubverbindung (174, 176) oder einer Schweißverbindung an einer Käsereibe (120; 122) angebracht ist.

## Revendications

1. Raccord de câble pour couvrir une connexion d'au moins un premier et un deuxième câbles d'alimentation (115, 116), chaque câble d'alimentation (115, 116) comprenant au moins un blindage électroconducteur (118, 119), le raccord de câble comprenant :
un corps de raccord de câble (107) comprenant un premier manchon isolant (106), un manchon de réenveloppement (104), dans lequel le premier manchon isolant (106) est au moins partiellement entouré par le manchon de réenveloppement (104), et au moins un connecteur électroconducteur (162), configuré pour connecter électriquement lesdits au moins deux câbles d'alimentation (115, 116),
dans lequel le premier manchon isolant (106) comprend une couche thermorétractable,
dans lequel le manchon de réenveloppement (104) comprend un matériau thermorétractable, et
**caractérisé en ce que**
le manchon de réenveloppement (104) est préinstallé sur le premier manchon isolant (106) pour former un canal (108) selon un axe longitudinal (117) du premier manchon isolant (106), le canal (108) étant configuré pour recevoir et contenir un élément conducteur (100), qui peut être connecté aux blindages électroconducteurs (118, 119) des deux câbles (115, 116),
dans lequel le canal (108) est configuré pour s'affaisser après la rétraction du manchon isolant (106) et du manchon de réenveloppement (104).

2. Raccord de câble selon la revendication 1, où ledit canal (108) contient l'élément conducteur (100) qui s'étend depuis une première borne (109) du canal jusqu'à une deuxième borne (110) du canal, configuré pour connecter les blindages conducteurs (118, 119) desdits au moins deux câbles.

3. Raccord de câble selon l'une des revendications précédentes, dans lequel le corps de raccord de câble (107) comprend en outre un treillis métallique ou un film électroconducteur qui entoure au moins partiellement le manchon isolant (106) et/ou au moins partiellement le canal (108) .

4. Raccord de câble selon l'une des revendications précédentes, comprenant en outre un connecteur à boulon (123), configuré pour être monté sur une première borne de câble, et pour maintenir une première borne de l'élément conducteur (100).

5. Raccord de câble selon l'une des revendications précédentes, comprenant en outre un ressort en rouleau (132), qui est configuré pour entourer un premier câble (115) et pour maintenir une première borne (101) de l'élément conducteur (100).

6. Raccord de câble selon la revendication 5, comprenant en outre un deuxième élément conducteur (121) et un troisième élément conducteur (103),
dans lequel le deuxième élément conducteur (121) est configuré pour entourer une borne de la couche conductrice d'une première borne de câble, dans lequel le ressort en rouleau (132) est configuré pour entourer une borne d'une couche semiconductrice (140) de la première borne de câble,
dans lequel la première borne (101) de l'élément conducteur (100) est configurée pour être pincée entre le ressort en rouleau (132) et la couche semiconductrice (140) de la première borne de câble, et dans lequel l'élément conducteur (100) et le deuxième élément conducteur (121) sont connectés via le troisième élément conducteur (103),
dans lequel une première extrémité du troisième élément conducteur (103) est configurée pour être pincée entre le ressort en rouleau (132) et une première enveloppe de câble (168) de la deuxième borne de câble, et dans lequel une deuxième extrémité du troisième élément conducteur (103) est fixée sur le deuxième élément conducteur (121).

7. Raccord de câble selon la revendication 6, comprenant en outre un quatrième élément conducteur (122),
dans lequel le quatrième élément conducteur (122) est configuré pour entourer une borne d'une couche semiconductrice (140) d'une deuxième borne de câble,
dans lequel le quatrième élément conducteur (122) est configuré pour être au moins partiellement entouré par un blindage en ruban de la deuxième borne de câble,
et dans lequel une deuxième borne (102) de l'élément conducteur (100) est fixée sur le quatrième élément conducteur (122).

8. Raccord de câble selon l'une des revendications précédentes, comprenant en outre un manchon de réenveloppement (113) associé à une première borne, configuré pour entourer une première borne du manchon de réenveloppement (104) et une borne d'une couche conductrice (118) d'une première borne de câble.

9. Raccord de câble selon l'une des revendications précédentes, comprenant en outre un manchon de réenveloppement (114) associé à une deuxième borne, configuré pour entourer le manchon de réenveloppement (104) et une borne de la couche conductrice d'une deuxième borne de câble.

10. Raccord de câble selon la revendication 4, dans lequel le connecteur à boulon (123) comprend en outre au moins un trou (124, 126) et au moins une vis (125), dans lequel le connecteur à boulon (123) est configuré pour être fixé à un fil (150) d'un blindage électroconducteur, et dans lequel la première borne (101) de l'élément conducteur (100) est configurée pour être insérée dans ledit trou (126) et fixée avec la vis (125).

11. Raccord de câble selon la revendication 10, dans lequel ledit trou (124) pointe en direction axiale, radiale ou azimutale.

12. Raccord de câble selon l'une des revendications précédentes, dans lequel l'élément conducteur (100) comprend une tresse et/ou au moins une feuille électroconductrice.

13. Raccord de câble selon l'une des revendications précédentes, dans lequel le canal (108) du corps de raccord de câble (107) est configuré pour contenir une deuxième tresse (100) formée par des fils électroconducteurs de fils de blindage (119) du deuxième câble, allant du deuxième câble au premier câble, dans lequel la deuxième tresse est configurée pour être connectée à une première tresse (103), formée par des fils électroconducteurs des fils de blindage (118) du premier câble.

14. Raccord de câble selon l'une des revendications précédentes, dans lequel ledit élément conducteur (100) est attaché à une râpe à fromage (120, 122) à l'aide d'une connexion à vis (174, 176) ou d'une connexion soudée.
